Europäisches Patentamt

European Patent Office

Office européen des brevets

(11) Numéro de publication : **0 066·501 B1**

# (12) FASCICULE DE BREVET EUROPÉEN

(45) Date de publication du fascicule du brevet :
20.02.85

(51) Int. Cl.⁴ : **B 23 Q 15/013**

(21) Numéro de dépôt : **82400912.0**

(22) Date de dépôt : **17.05.82**

(54) **Dispositif de commande pour machine-outil.**

(30) Priorité : **18.05.81 FR 8109825**

(43) Date de publication de la demande :
**08.12.82 Bulletin 82/49**

(45) Mention de la délivrance du brevet :
**20.02.85 Bulletin 85/08**

(84) Etats contractants désignés :
**AT BE CH DE GB IT LI LU NL SE**

(56) Documents cités :
**DE-C- 966 754**
**FR-A- 2 242 198**
**US-A- 3 076 906**
**US-A- 3 497 668**

(73) Titulaire : **CENTRE D'ETUDES DU FRAISAGE (C.E.F.)**
**80 rue des Meuniers**
**F-92220 Bagneux (FR)**

(72) Inventeur : **Sachot, Michel**
**55, rue Curie**
**F-91400 Saclay (FR)**

(74) Mandataire : **Laget, Jean-Loup et al**
**Cabinet Pierre Loyer 18, Rue de Mogador**
**F-75009 Paris (FR)**

Jouve, 18, rue St-Denis, 75001 Paris, France

## Description

L'invention concerne un dispositif de commande pour machine-outil, et plus spécialement un dispositif de commande par manivelle et circuit électronique pour machine-outil.

Dans les machines-outils de type classique, les mouvements d'un axe de la machine sont commandés par un moteur placé sous le contrôle d'un variateur de vitesse. Usuellement, ce variateur reçoit une consigne par l'intermédiaire d'une dynamo tachymétrique.

Selon le document FR-A-2 242 198, une manivelle entraîne directement la dynamo tachymétrique. Pour assurer une certaine régularité de la commande, il est prévu un frein additionnel sur l'arbre de la manivelle, réglable par l'utilisateur.

Lors d'une opération d'usinage, l'utilisateur ne se rend pas toujours compte de la difficulté de l'opération et la consigne affichée peut dépasser les possibilités de la machine, au risque d'entraîner une rupture d'outil ou une destruction du moteur. Ce risque est également important dans le cas d'une commande automatique.

En outre, l'utilisation d'un frein totalement indépendant des conditions de fonctionnement de la machine-outil, comme dans le document précité FR-A-2 242 198, peut masquer pour l'utilisateur les difficultés réelles de l'opération d'usinage, qui proviennent essentiellement de deux facteurs : une vitesse d'exécution imposée trop grande, et un effort trop grand imposé à l'outil.

Un but de l'invention est de permettre à l'utilisateur de se rendre compte directement de la difficulté de l'opération d'usinage, et d'agir en conséquence sur la vitesse d'avancement de l'outil.

Un autre but de l'invention est de permettre cette prise de conscience de l'utilisateur par deux voies électroniques distinctes.

L'invention a pour objet un dispositif de commande pour machine-outil, du type dans lequel une manivelle manœuvrable par l'utilisateur entraîne une dynamo tachymétrique qui adresse un signal de consigne au variateur de vitesse du moteur d'un axe de la machine-outil, caractérisé en ce que la liaison entre la manivelle et la dynamo tachymétrique est assurée par l'intermédiaire d'un coupleur magnétique à poudre agissant en frein pour la manivelle, ledit coupleur étant alimenté à la fois par un signal en provenance de la dynamo tachymétrique représentatif du signal de consigne et par un signal image de l'intensité du courant dans l'induit du moteur représentatif de la charge de ce moteur.

Selon une autre caractéristique de l'invention, le signal de consigne engendré par la dynamo tachymétrique est appliqué à un relais qui assure la libération du variateur de vitesse à partir d'une certaine vitesse de rotation de la dynamo.

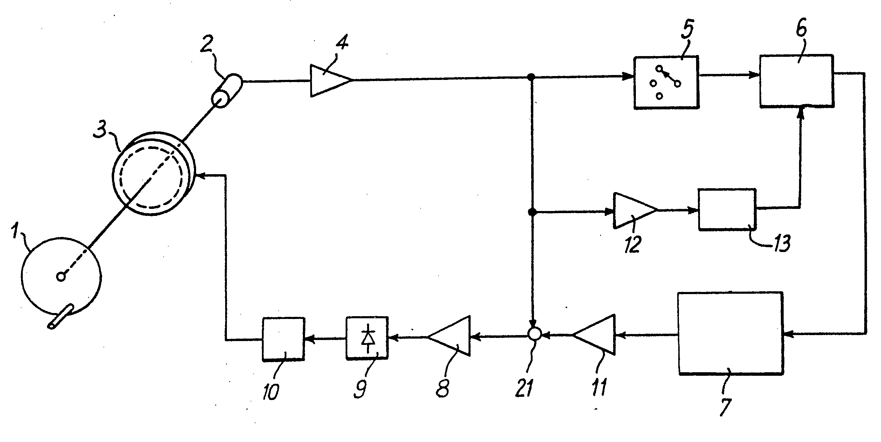

Les caractéristiques de l'invention ressortiront de la description qui suit faite avec référence au dessin annexé sur lequel on peut voir un schéma symbolique simplifié d'un dispositif de commande pour machine-outil selon l'invention.

En se reportant au dessin, on peut voir que la manivelle 1 manœuvrable par l'utilisateur est reliée à la dynamo tachymétrique 2 par l'intermédiaire d'un coupleur magnétique à poudre 3. Le signal analogique délivré par la dynamo tachymétrique 2 permet de contrôler le sens de déplacement et la vitesse de l'axe commandé sur la machine-outil. Ce signal est amplifié par l'amplificateur 4 et appliqué à un circuit 5 de calibration de la consigne à délivrer au variateur 6 de vitesse du moteur 7 d'entraînement de l'axe commandé. Ce signal est également appliqué à un amplificateur 8 relié à un redresseur 9 fournissant un signal redressé à l'alimentation 10 du coupleur magnétique 3.

Par ailleurs, un signal image du courant dans l'induit du moteur 7 est prélevé et appliqué à un amplificateur 11 qui alimente à son tour l'amplificateur 8 et donc le coupleur magnétique 3.

Enfin, le signal de la dynamo tachymétrique 2 est appliqué par l'intermédiaire d'un amplificateur 12, à un relais 13 qui, lorsqu'il est excité, c'est-à-dire à partir d'une certaine vitesse de rotation de la dynamo tachymétrique, libère le mouvement de la machine-outil. Il s'agit là d'une sécurité ayant pour objet de bloquer la machine au repos.

Le circuit 5, de calibration de la consigne à délivrer au variateur 6, est représenté avec trois positions, correspondant à trois amplitudes possibles, pour obtenir des déplacements plus ou moins rapides de l'axe de la machine-outil. On peut ainsi jouer sur un facteur d'échelle.

Le coupleur magnétique à poudre 3 agit en frein sur l'arbre de la manivelle 1, et il simule le couple de charge d'une manivelle mécanique en recevant d'une part un signal proportionnel à la vitesse de déplacement de l'outil par l'intermédiaire de l'amplificateur 4, d'autre part un signal proportionnel à la charge du moteur, donc à la difficulté de l'usinage, par l'intermédiaire de l'amplificateur 11.

L'utilisateur peut ainsi se rendre compte manuellement, en manœuvrant la manivelle 1, de la difficulté de l'usinage représentée par la difficulté de manœuvre due à la résistance du coupleur magnétique 3, et il peut alors réduire en conséquence la vitesse d'avancement de l'outil.

En jouant sur le gain de l'amplificateur 4, on peut doser le couple de freinage du coupleur 3 en réponse au signal de vitesse. De même, en jouant sur le gain de l'amplificateur 11, on peut doser le couple de freinage du coupleur 3 en réponse au signal de charge du moteur. Dans les deux cas, l'action mécanique de freinage du coupleur 3 conduit l'utilisateur à réduire la vitesse de rotation de la manivelle 1 ce qui détermine une diminution de la vitesse du moteur 7 par l'intermédiaire de la dynamo tachymétrique 2, de l'amplificateur 4, du circuit de calibration 5 et du variateur 6.

On peut équiper chaque axe de machine-outil d'une manivelle couplée à une dynamo tachymétrique par l'intermédiaire d'un coupleur magnétique.

## Revendications

1. Dispositif de commande pour machine-outil, du type dans lequel une manivelle (1) manœuvra-ble par l'utilisateur entraîne une dynamo tachymétrique (2) qui adresse un signal de consigne au variateur de vitesse (6) du moteur (7) d'un axe de la machine-outil, caractérisé en ce que la liaison entre la manivelle (1) et la dynamo tachymétrique (2) est assurée par l'intermédiaire d'un coupleur magnétique à poudre (3) agissant en frein pour la manivelle, ledit coupleur étant alimenté à la fois par un signal en provenance de la dynamo tachymétrique (2) représentatif du signal de consigne et par un signal image de l'intensité du courant dans l'induit du moteur (7) représentatif de la charge de ce moteur.

2. Dispositif selon la revendication 1, caractérisé en ce que le signal de consigne engendré par la dynamo tachymétrique (2) est appliqué à un relais (13) qui assure la libération du variateur de vitesse (6) à partir d'une certaine vitesse de rotation de la dynamo.

## Claims

1. A control device for a machine-tool of the type in which a crank (1) operable by the user drives a tachymetric dynamo (2) sending a reference signal to speed variator (6) of the motor (7) of an axis of the machine-tool, wherein the connection between the crank (1) and the tachymetric dynamo is provided via a powder magnetic coupler (3) acting as a brake on the crank, said coupler beeing fed with a signal incoming from the tachymetric dynamo (2) and representative of the reference signal as well as with a signal image of the current intensity in the motor armature representative of the load of said motor.

2. A device according to claim 1, wherein the reference signal generated by the tachymetric dynamo (2) is applied to a relay (13) providing the liberation of the speed variator (6) as from a certain rotation speed of the dynamo.

## Ansprüche

1. Steuereinrichtung für eine Werkzeugmaschine, in der eine durch den Benutzer betätigbare Kurbel (1) einen Tachogenerator (2) antreibt, der einen stufenlos regelbaren Drehzahlregler (6) für einen Motor (7) für eine Achse der Werkzeugmaschine mit einem Befehlssignal beaufschlagt, dadurch gekennzeichnet, daß die Verbindung zwischen der Kurbel (1) und dem Tachogenerator (2) mittels einer Magnetpulverkupplung (3) gebildet wird, die für die Kurbel als Bremse wirkt, wobei die Kupplung gleichzeitig mit einem Signal vom tachogenerator (2), das das Befehlssignal darstellt, und einem Meßsignal für die Stromstärke im Anker des Motors (7), das die Belastung des Motors darstellt, beaufschlagt wird.

2. Einrichtung nach Anspruch 1, dadurch gekennzeichnet, daß das vom Tachogenerator (2) erzeugte Signal einem Relais (13) zugeführt wird, das die Freigabe des stufenlos regelbaren Drehzahlreglers (6) ab einer bestimmten Drehzahl des Generators bewirkt.